# EUROPEAN PATENT APPLICATION

(11) **EP 3 623 800 A1**
(43) Date of publication of application: **18.03.2020**
(21) Application number: 17898327.6
(22) Date of filing: 11.12.2017
(51) Int. Cl.: G01N 21/88, G01N 21/01

(54) **DETECTION APPARATUS AND DETECTION METHOD FOR DEFECT OF DISPLAY PANEL, AND MICROSCOPE**

(30) Priority: 11.05.2017 CN 201710329998
(71) Applicant: BOE Technology Group Co., Ltd., Beijing 100015 (CN); Ordos Yuansheng Optoelectronics Co., Ltd., Ordos, Inner Mongolia 017020 (CN)
(72) Inventor: LIU, Tienan, Beijing 100176 (CN); WANG, Yuelin, Beijing 100176 (CN); WANG, Yanming, Beijing 100176 (CN); MENG, Weixin, Beijing 100176 (CN); FANG, Yezhou, Beijing 100176 (CN); XU, Jingyi, Beijing 100176 (CN); ZHAO, Yanyan, Beijing 100176 (CN); REN, Yanwei, Beijing 100176 (CN)
(74) Representative: AWA Sweden AB
(86) International application number: PCT/CN2017/115454
(87) International publication number: WO 2018/205592

(57) **Abstract**

The present disclosure relates to an apparatus and method for detecting display panel defects and a microscope. The apparatus for detecting display panel defects comprises: a switch component (3) connected to a microscope (10); a detection component (1), which is disposed on the switch component (3) and has a first visual area, the detection component (1) being configured to detect a position of a microscopic defect in a display panel; and a marking component (2), which is disposed on the switch component (3) and has a second visual area with a smaller area than the first visual area, the marking component (2) being configured to mark the position of the microscopic defect in the display panel, wherein the switch component (3) is configured to rotate the marking component (2) to a position of the detection component (1) and mark a position of the microscopic defect by the marking component (2) after the detection component (1) detects the position.

## Description

### CROSS-REFERENCE TO RELATED APPLICATION

This application claims the priority of Chinese Patent Application No. 201710329998.3 submitted to the Chinese Intellectual Property Office on May 11, 2017, the disclosure of which is incorporated herein in its entirety by reference.

### TECHNICAL FIELD

The present disclosure relates to the technical field of display technology, and particularly relates to an apparatus and method for detecting display panel defects and a microscope.

### BACKGROUND OF THE INVENTION

Microscope is a device widely applied in the field of Thin Film Transistor (TFT). During analysis of defects in a detected object (such as a display panel), the microscopic appearance of the detected object can be observed using a microscope.

There is an apparatus for detecting display panel defects in the existing art which, after detecting a region including a microscopic defect in the detected object, marks the microscopic defect in the region manually. Specifically, a worker uses a mark pen to draw a circle around a surface of the detected object so that the microscopic defect lies within the circle drawn by the worker. Due to the microscope, the worker completes the microscopic defect marking process each time by squinting at the microscopic defect. At this point, even if the worker is very skillful and the mark pen is fine enough, it is still impossible to obtain a precise region including the microscopic defect.

### SUMMARY

The present disclosure has been accomplished in order to at least partially solve the problems in the prior art. The present disclosure provides an apparatus and method for detecting display panel defects and a microscope that can precisely mark a microscopic defect in a display panel.

According to one aspect of the disclosure, there is provided an apparatus for detecting display panel defects, comprising:
a switch component, which is connected to a microscope;
a detection component, which is disposed on the switch component and has a first visual area, the detection component being configured to detect a position of a microscopic defect in a display panel; and
a marking component, which is disposed on the switch component and has a second visual area with a smaller area than the first visual area, the marking component being configured to mark the position of the microscopic defect in the display panel,
the switch component is configured to rotate the marking component to a position of the detection component and mark a position of the microscopic defect by the marking component after the detection component detects the position.

The marking component may include:
an observation part, which is configured to observe the position of the microscopic defect in the display panel; and
a raised part, which is disposed at a side of the observation part proximal to the display panel and has a colorant for marking the position of the microscopic defect.

The raised part may have a marking pattern including any one of parallel lines, circle, rectangle and triangle.

The apparatus for detecting display panel defects may further include:
a drive component via which the switch component is connected to the microscope, the drive component being configured to drive the switch component to move upward and downward along an axial direction of the microscope.

The drive component may include:
an in-focus spiral, which is fixed on the microscope; and
a threaded rod, which is connected to the in-focus spiral at one end and the switch component at the other end.

The switch component may include:
a positioning member, which has a hollow structure and is connected to the drive component;
a rotating shaft, which is disposed within the hollow structure of the positioning member; and
a carrying member, which is connected to the rotating shaft and has a first carrying part and a second carrying part connected to each other, the first carrying part being configured to carry the detection component, and the second carrying part being configured to carry the marking component.

The rotating shaft may be provided with a first recess in a direction perpendicular to an axis thereof, a spring and a positioning ball are disposed sequentially within the first recess along a direction of an opening of the first recess, the spring is fixed at a bottom of the first recess at one end and connected to the positioning ball at the other end; and
the positioning member is provided with a second recess fitting to the positioning ball at an inner wall of the hollow structure thereof.

The first carrying part may be threadedly connected to the detection component, and the second carrying part may be threadedly connected to the marking component.

After the marking component is placed on the second carrying part and the detection component is placed on the first carrying part, a distance between the marking component and the detected display panel is about 2 mm smaller than a distance between the detection component and the detected display panel.

The detection component may have an objective with a first magnification, and the marking component may have an objective with a second magnification greater than the first magnification.

A center of the first visual area and a center of the second visual area may coincide after the switch component is rotated by 180°.

According to another aspect of the disclosure, there is provided a method for detecting display panel defects using the above discussed apparatus for detecting display panel defects, the method comprising:
by the detection component, detecting a position of a microscopic defect in a display panel, and determining a first visual area including the position of the microscopic defect;
by the switch component, rotating the marking component to a position of the detection component after the detection component detects the position of the microscopic defect; and
by the marking component, determining and marking a specific position of the microscopic defect in the first visual area including the position of the microscopic defect.

Before the step of by the detection component, detecting the position of the microscopic defect in the display panel, and determining the first visual area including the position of the microscopic defect, the method may further include the step of:
calibrating the marking component so that a center of the first visual area and a center of the second visual area coincide after the switch component is rotated by 180°.

The step of by the detection component, detecting the position of the microscopic defect in a display panel, and determining the first visual area including the position of the microscopic defect may specifically include:
by the detection component, detecting a position of a microscopic defect in a display panel, aligning the position of the microscopic defect with a center of the detection component, and then determining a first visual area including the position of the microscopic defect.

According to yet another aspect of the disclosure, there is provided a microscope comprising the above discussed apparatus for detecting display panel defects.

### BRIEF DESCRIPTION OF THE FIGURES

Fig. 1 is a schematic view showing an apparatus for detecting display panel defects according to a first exemplary embodiment of the disclosure;
Fig. 2 is a cross-sectional view showing the apparatus for detecting display panel defects according to the first exemplary embodiment of the disclosure;
Figs. 3 and 4 are schematic bottom views showing a marking component of the apparatus for detecting display panel defects according to the first exemplary embodiment of the disclosure;
Fig. 5 is a flowchart showing a method for detecting display panel defects according to a second exemplary embodiment of the disclosure; and
Fig. 6 is a specific flowchart showing the method for detecting display panel defects according to the second exemplary embodiment of the disclosure.

### DETAILED DESCRIPTION

To improve understanding of the technical solution of the present disclosure for those skilled in the art, the present disclosure will be described below in detail in conjunction with the accompanying drawings and specific embodiments.

### First Exemplary Embodiment

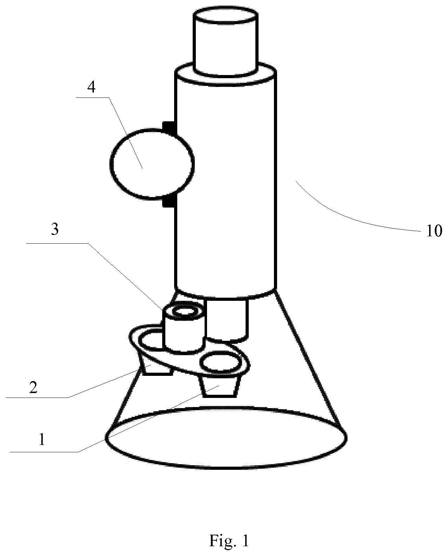

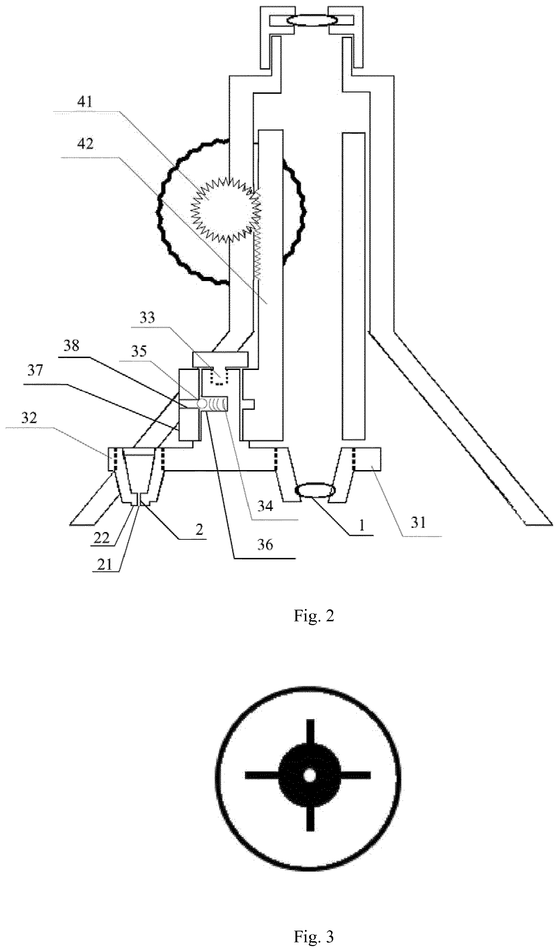

According to one aspect of the disclosure, this exemplary embodiment provides an apparatus for detecting display panel defects configured to detect a microscopic defect in a display panel. As shown in Figs. 1 and 2, the apparatus for detecting display panel defects includes a detection component 1, a marking component 2 and a switch component 3. The detection component 1 and the marking component 2 are both disposed on the switch component 3 which is connected to a microscope 10. The detection component 1 has a first visual area and is configured to detect a position of a microscopic defect in the display panel. The switch component 3 is configured so that the marking component 2 is rotated to the position of the microscopic defect after the detection component 1 detects the position of the microscopic defect. The marking component 2 has a second visual area with a smaller area than the first visual area. The second visual area is configured to determine a specific position of the microscopic defect in the first visual area including the position of the microscopic defect. The specific position is marked by the marking component 2.

In the exemplary embodiment, the apparatus for detecting display panel defects includes the switch component 3 disposed on the microscope 10, and the detection component 1 and the marking component 2 connected to the switch component 3. The first visual area of the detection component 1 is larger than the second visual area of the marking component 2. Thus, after the detection component 1 detects the position of the microscopic defect in the display panel, the marking component 2 may be rotated to the position of the microscopic defect by the switch component 3. Next, the marking component 2 determines and marks the specific position of the microscopic defect in the first visual area including the position of the microscopic defect. In short, firstly the detection component 1 determines a larger scope (i.e., the first visual area) of the microscopic defect; and then the marking component 2 determines a smaller scope (i.e., the second visual area) of the microscopic defect and directly marks the position of the microscopic defect in the first visual area including the microscopic defect. In the apparatus for detecting display panel defects according to the exemplary embodiment, after the marking component 2 detects the specific position of the microscopic defect, the specific position of the microscopic defect is directly marked by the marking component 2 so as to avoid various disadvantages of manually marking the position of the microscopic defect in the display panel as in the existing art, thereby obtaining a more precise region of the microscopic defect and higher detection efficiency.

In the exemplary embodiment, a center of the first visual area of the detection component 1 and a center of the second visual area of the marking component 2 coincide after the switch component 3 is rotated by 180°.

The reason for such setting lies in that after the detection component 1 detects the first visual area including the microscopic defect, a position of the detection component 1 may be adjusted so that the center of the first visual area of the detection component 1 corresponds to the position of the microscopic defect. Next, the switch component is directly rotated by 180° so that the center of the second visual area of the marking component 2 also falls into the position of the microscopic defect. Then, the marking component 2 may directly mark the microscopic defect. Thus, the detection efficiency and precision of the microscopic defect are greatly improved.

In the exemplary embodiment, the apparatus for detecting display panel defects further includes a drive component 4 via which the switch component 3 is connected to the microscope 10, the drive component 4 being configured to drive the switch component 3 to move upward and downward along an axial direction of the microscope 10.

Specifically, when the drive component 4 drives the switch component 3 to move upward and downward along the axial direction of the microscope 10, the drive component 4 may drive the detection component 1 and the marking component 2 to move upward and downward along the axial direction of the microscope 10 so as to conduct detection of the position of the microscopic defect by the detection component 1 and the marking component 2, as well as drive the marking component 2 to mark the position of the microscopic defect.

In the exemplary embodiment, the drive component 4 includes an in-focus spiral 41 and a threaded rod 42. The in-focus spiral 41 is fixed on the microscope 10, and the threaded rod 42 is connected to the in-focus spiral 41 at one end and the switch component 3 at the other end. At this time, the threaded rod 42 may be driven to move upward and downward by rotating the in-focus spiral 41 so as to adjust a distance between the detection component 1 and the marking component 2 and the display panel, as well as drive the marking component 2 to mark the position of the microscopic defect.

In the exemplary embodiment, the switch component 3 includes a positioning member 37, a rotating shaft 33, and a carrying member. The positioning member 37 has a hollow structure and is connected to the drive component 4. The rotating shaft 33 is disposed within the hollow structure of the positioning member 37 and connected to the carrying member. The carrying member includes a first carrying part 31 and a second carrying part 32 connected to each other, the first carrying part 31 is configured to carry the detection component 1, and the second carrying part 32 is configured to carry the marking component 2.

The rotating shaft 33 is provided with a first recess 36 in a direction perpendicular to an axis thereof. A spring 34 and a positioning ball 35 are disposed sequentially within the first recess 36 along a direction of an opening of the first recess 36. The spring 34 is fixed at a bottom of the first recess 36 at one end and connected to the positioning ball 35 at the other end. The positioning member 37 is provided with a second recess 38 fitting to the positioning ball 35 at an inner wall of the hollow structure thereof. At this time, a rotation position of the rotating shaft 33 may be positioned by the positioning ball 35. In the exemplary embodiment, the number of the second recesses 38 is two so that two rotation positions of the rotating shaft 33 after being rotated by 180° are positioned, and thus a switch of positions of the detection component 1 and the marking component 2 is realized. The present invention is not limited thereto; any suitable number of the second recesses 38 may be provided as needed.

In the exemplary embodiment, the first carrying part 31 is threadedly connected to the detection component 1; and the second carrying part 32 is threadedly connected to the marking component 2. That is, the first carrying part 31 and the second carrying part 32 have inner threads while the detection component 1 and the marking component 2 have outer threads.

The reason for adopting the threaded connection lies in that threaded connection facilitates replacement of the detection component 1 and the marking component 2. In addition, by the threaded connection, the detection component 1 and the marking component 2 can be fixed in the first carrying part 31 and the second carrying part 32 respectively so as to prevent the detection component 1 and the marking component 2 from waggling due to rotation of the rotating shaft 33 or driving of the drive component 4 during detection of the microscopic defect, and thus influencing the precision in detection.

In the exemplary embodiment, after the marking component 2 is placed on the second carrying part 32 and the detection component 1 is placed on the first carrying part 31, the distance between the marking component 2 and the display panel is about 2 mm smaller than the distance between the detection component 1 and the display panel. Thus, it is ensured that the distance between the marking component 2 and the display panel is smaller than the distance between the detection component 1 and the display panel so as to prevent the detection component 1 coming into contact with the display panel and thus prevent the display panel from being scratched when the marking component 2 marks the microscopic defect.

In the exemplary embodiment, the detection component 1 has an objective with a first magnification, and the marking component 2 has an objective with a second magnification greater than the first magnification. Thus, a region including the microscopic defect may be detected firstly by the objective with a smaller magnification, and then, by switching to the objective with a greater magnification (e.g., a 50× objective), a region smaller than the region including the microscopic defect detected by the objective with a smaller magnification is determined. In this method, the marking precision of the microscopic defect is improved, the microscopic defect is marked more quickly and thus the overall marking efficiency is increased.

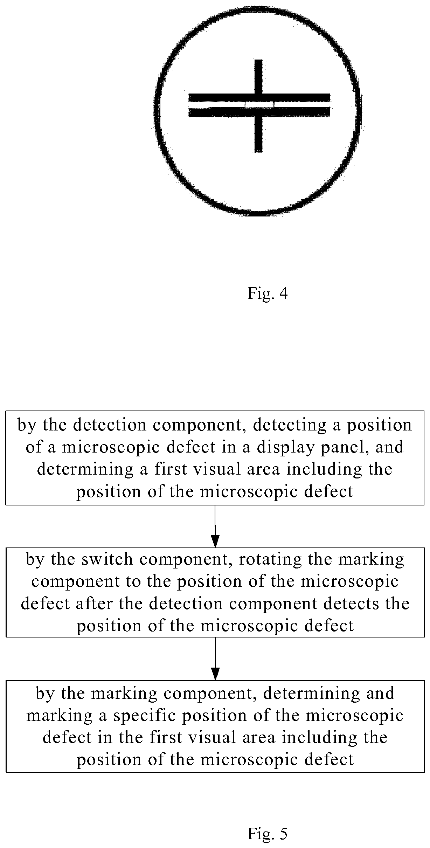

In the exemplary embodiment, the marking component 2 includes an observation part 21 and a raised part 22 at a side of the observation part 21 proximal to the display panel. The observation part 21 is used to observe the position of the microscopic defect in the display panel, and the raised part 22 is used to mark a region including the position of the microscopic defect after coloring. As shown in Figs. 3 and 4, the raised part 22 has a marking pattern including any one of parallel lines, circle, rectangle and triangle.

In the exemplary embodiment, a height of the raised part 22 on the marking component 2 may be any suitable height, and a diameter of the observation part 21 matches a size of the microscopic defect. Apparently, a suitable marking component 2 may be used instead dependent on the size of the microscopic defect.

### Second Exemplary Embodiment

According to another aspect of the disclosure, this exemplary embodiment provides a method for detecting display panel defects using the apparatus for detecting display panel defects of the first exemplary embodiment. As shown in Fig. 5, the method comprises the steps of:
by the detection component 1, detecting a position of a microscopic defect in a display panel, and determining a first visual area including the position of the microscopic defect;
rotating the marking component 2 to the position of the microscopic defect by the switch component 3 after the detection component 1 detects the position of the microscopic defect;
by the marking component 2, determining and marking a specific position of the microscopic defect in the first visual area including the position of the microscopic defect (i.e., determining a second visual area including the position of the microscopic smaller than the first visual area within the first visual area including the position of the microscopic defect).

In the method for detecting display panel defects of the exemplary embodiment, after the detection component 1 detects the position of the microscopic defect in the display panel, the marking component 2 may be rotated to the position of the microscopic defect by the switch component 3. Next, the marking component 2 determines and marks the specific position of the microscopic defect in the first visual area including the position of the microscopic defect. In short, firstly the detection component 1 determines a larger scope (i.e., the first visual area) of the microscopic defect; and then the marking component 2 determines a smaller scope (i.e., the second visual area) of the microscopic defect and directly marks the position of the microscopic defect in the first visual area including the microscopic defect. In the apparatus for detecting display panel defects according to the exemplary embodiment, after the marking component 2 detects the specific position of the microscopic defect, the specific position of the microscopic defect is directly marked by the marking component 2 so as to avoid various disadvantages of manually marking the position of the microscopic defect in the display panel as in the existing art, thereby obtaining a more precise region of the microscopic defect and higher detection efficiency.

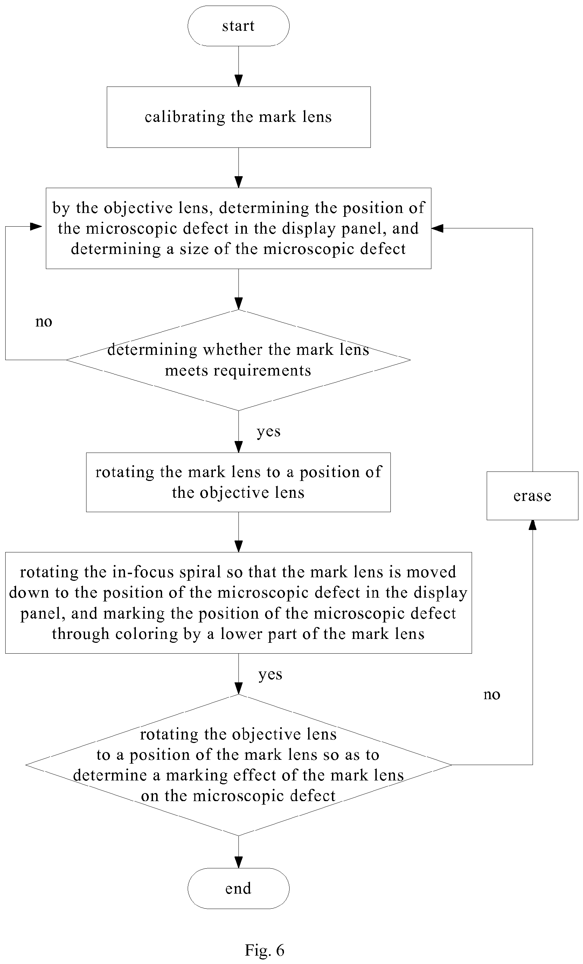

The method for detecting display panel defects according to the exemplary embodiment will now be described in detail under the following conditions: the detection component 1 has an objective with a first magnification (i.e., the detection component 1 is an objective lens), and the marking component 2 has an objective with a second magnification (i.e., the marking component 2 is a mark lens) greater than the first magnification; a center of the first visual area of the detection component 1 and a center of the second visual area of the marking component 2 coincide after the switch component 3 is rotated by 180°; the switch component 3 includes a positioning member 37, a rotating shaft 33, a first carrying part 31 and a second carrying part 32; and the drive component 4 includes an in-focus spiral 41 and a threaded rod 42. As shown in Fig. 6, the method specifically comprises the steps of:
Step S1, calibrating the mark lens. Specifically, coinciding the observation part (a position of the hole in the mark lens) of the mark lens with a mark at the center of the objective lens after the switch component 3 is rotated by 180° so as to complete calibration of the mark lens.
Step S2, by the objective lens, determining the position of the microscopic defect in the display panel, and determining a size of the microscopic defect, i.e., determining the first visual area including the position of the microscopic defect. If the size of the microscopic defect is about 200 µm, a mark lens with a diameter of about 300 µm is selected.
Step S3, determining whether the mark lens meets requirements; if not, selecting a corresponding mark lens and returning to S2.
Step S4, rotating the mark lens to a position of the objective lens by rotating the rotating shaft 33.
Step S5, rotating the in-focus spiral 41 so that the mark lens is moved down to the position of the microscopic defect in the display panel, and marking the position of the microscopic defect through coloring by a lower part of the mark lens.
Step S6, rotating the objective lens to a position of the mark lens by rotating the rotating shaft 33 so as to determine a marking effect of the mark lens on the microscopic defect; if there is no problem, the procedure is ended; if the mark does not meet the requirements, erasing the mark and returning to S2 to mark again.

### Third Exemplary Embodiment

According to yet another aspect of the disclosure, this exemplary embodiment provides a microscope 10 comprising the apparatus for detecting display panel defects of the first exemplary embodiment to mark a position of a microscopic defect in a display panel.

It should be understood that the above embodiments are merely exemplary embodiments for the purpose of illustrating the principle of the disclosure, and the disclosure is not limited thereto. Various modifications and improvements can be made by a person having ordinary skill in the art without departing from the spirit and essence of the disclosure. Accordingly, all of the modifications and improvements also fall into the protection scope of the disclosure.

## Claims

1. An apparatus for detecting display panel defects comprising:
a switch component (3), which is connected to a microscope (10);
a detection component (1), which is disposed on the switch component (3) and has a first visual area, the detection component (1) being configured to detect a position of a microscopic defect in a display panel; and
a marking component (2), which is disposed on the switch component (3) and has a second visual area with a smaller area than the first visual area, the marking component (2) being configured to mark the position of the microscopic defect in the display panel,
wherein the switch component (3) is configured to rotate the marking component (2) to a position of the detection component (1) and mark a position of the microscopic defect by the marking component (2) after the detection component (1) detects the position.

2. The apparatus for detecting display panel defects according to claim 1,
wherein the marking component (2) comprises:
an observation part (21), which is configured to observe the position of the microscopic defect in the display panel; and
a raised part (22), which is disposed at a side of the observation part (21) proximal to the display panel and has a colorant for marking the position of the microscopic defect.

3. The apparatus for detecting display panel defects according to claim 2,
wherein the raised part (22) has a marking pattern including any one of parallel lines, circle, rectangle and triangle.

4. The apparatus for detecting display panel defects according to claim 1, further comprising:
a drive component (4) via which the switch component (3) is connected to the microscope (10), the drive component (4) being configured to drive the switch component (3) to move upward and downward along an axial direction of the microscope (10).

5. The apparatus for detecting display panel defects according to claim 4,
wherein the drive component (4) comprises:
an in-focus spiral (41), which is fixed on the microscope (10); and
a threaded rod (42), which is connected to the in-focus spiral (41) at one end and the switch component (3) at the other end.

6. The apparatus for detecting display panel defects according to claim 4,
wherein the switch component (3) comprises:
a positioning member (37), which has a hollow structure and is connected to the drive component (4);
a rotating shaft (33), which is disposed within the hollow structure of the positioning member (37); and
a carrying member, which is connected to the rotating shaft (33) and has a first carrying part (31) and a second carrying part (32) connected to each other, the first carrying part (31) being configured to carry the detection component (1), and the second carrying part (32) being configured to carry the marking component (2).

7. The apparatus for detecting display panel defects according to claim 6,
wherein the rotating shaft (33) is provided with a first recess (36) in a direction perpendicular to an axis thereof, a spring (34) and a positioning ball (35) are disposed sequentially within the first recess (36) along a direction of an opening of the first recess (36), the spring (34) is fixed at a bottom of the first recess (36) at one end and connected to the positioning ball (35) at the other end; and
the positioning member (37) is provided with a second recess (38) fitting to the positioning ball (35) at an inner wall of the hollow structure thereof.

8. The apparatus for detecting display panel defects according to claim 6,
wherein the first carrying part (31) is threadedly connected to the detection component (1), and the second carrying part (32) is threadedly connected to the marking component (2).

9. The apparatus for detecting display panel defects according to claim 6,
wherein after the marking component (2) is placed on the second carrying part (32) and the detection component (1) is placed on the first carrying part (31), a distance between the marking component (2) and the detected display panel is about 2 mm smaller than a distance between the detection component (1) and the detected display panel.

10. The apparatus for detecting display panel defects according to claim 1,
wherein the detection component (1) has an objective with a first magnification, and the marking component (2) has an objective with a second magnification greater than the first magnification.

11. The apparatus for detecting display panel defects according to claim 1,
wherein a center of the first visual area and a center of the second visual area coincide after the switch component (3) is rotated by 180°.

12. A method for detecting display panel defects using the apparatus for detecting display panel defects according to claim 1, the method comprising:
by the detection component (1), detecting a position of a microscopic defect in a display panel, and determining a first visual area including the position of the microscopic defect;
by the switch component (3), rotating the marking component (2) to a position of the detection component (1) after the detection component (1) detects the position of the microscopic defect; and
by the marking component (2), determining and marking a specific position of the microscopic defect in the first visual area including the position of the microscopic defect.

13. The method for detecting display panel defects according to claim 12,
wherein before the step of by the detection component (1), detecting the position of the microscopic defect in the display panel, and determining the first visual area including the position of the microscopic defect, the method further comprises the step of:
calibrating the marking component (2) so that a center of the first visual area and a center of the second visual area coincide after the switch component (3) is rotated by 180°.

14. The method for detecting display panel defects according to claim 13,
wherein the step of by the detection component (1), detecting the position of the microscopic defect in the display panel, and determining the first visual area including the position of the microscopic defect specifically includes:
by the detection component (1), detecting a position of a microscopic defect in a display panel, aligning the position of the microscopic defect with a center of the detection component (1), and then determining a first visual area including the position of the microscopic defect.

15. A microscope comprising the apparatus for detecting display panel defects according to claim 1.
